# EUROPEAN PATENT APPLICATION

(11) **EP 2 690 328 A1**
(43) Date of publication of application: **29.01.2014**
(21) Application number: 13177519.9
(22) Date of filing: 23.07.2013
(51) Int. Cl.: F16K 11/078

(54) **Single-lever mixing faucet**

(30) Priority: 23.07.2012 JP 2012163125
(71) Applicant: LIXIL Corporation, Koto-ku Tokyo 136-8535 (JP)
(72) Inventor: Kondou, Takahiro, Tokyo, Tokyo 136-8535 (JP); Shimizu, Kazuyuki, Tokyo, Tokyo 136-8535 (JP); Nakanishi, Atsushi, Tokyo, Tokyo 136-8535 (JP); Hagiwara, Takashi, Tokyo, Tokyo 136-8535 (JP)
(74) Representative: Dennemeyer & Associates S.A.

(57) **Abstract**

Provided is a single-lever mixing faucet that can realize a function of manually discharging water from a water discharge hole by an operation of a lever handle and a function of automatically discharging water from the water discharge hole based on a detection of a human body by a sensor, and that offers good usability for the automatic water discharge function. A single-lever mixing faucet (10) includes a second outlet valve hole (64) as an outlet valve hole of a fixed valve body (48) in addition to a first outlet valve hole (70). The first outlet valve hole (70) is opened or closed by the opening or closing operation by the lever handle (14) so as to communicate with or not to communicate with a cold water inlet valve hole (66) and/or a hot water inlet valve hole (68). The second outlet valve hole (64) is kept open by communicating with the cold water inlet valve hole (66) and/or the hot water inlet valve hole (68) through a communication opening (72) of a movable valve body.

## Description

### Technical Field

The present invention relates to a single-lever mixing faucet which includes a fixed valve body and a movable valve body and which is configured to cause the movable valve body to slide over the fixed valve body by an operation of a lever handle so as to start or stop discharge of water or adjust the flow and temperature of discharging water.

### Background Art

Hitherto, as a mixing faucet, a single-lever mixing faucet has been widely used which includes (a) a fixed valve body that includes a cold water inlet valve hole, a hot water inlet valve hole, and a cold water and/or hot water outlet valve hole, (b) a movable valve body that includes a communication opening causing the cold water inlet valve hole and/or the hot water inlet valve hole to communicate with the outlet valve hole and that slides on the fixed valve body, and (c) a lever handle which moves the movable valve body. The single-lever mixing faucet starts or stops discharge of water and adjusts the flow of discharging water by changing a communication state of the outlet valve hole with respect to the cold water inlet valve hole and/or the hot water inlet valve hole by an opening or closing operation through the turning of the lever handle. The single-lever mixing faucet adjusts the temperature of discharging water by changing, by a temperature adjusting operation, the opening degrees of the cold water inlet valve hole and the hot water inlet valve hole with respect to the communication opening with an inverse relation.

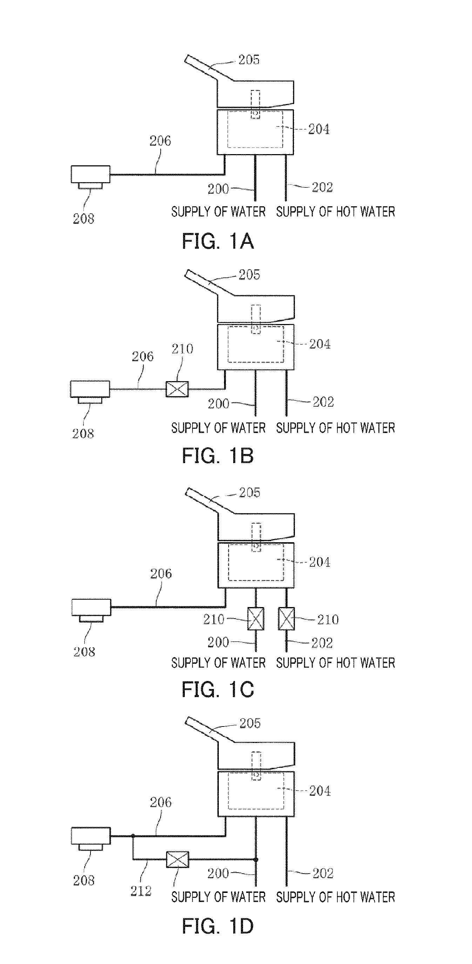

As such a single-lever mixing faucet, a single-lever mixing faucet has been known that is provided with a function of automatically discharging water from a water discharge hole. FIGS. 1A to 1D schematically illustrate an exemplary scheme of providing an automatic water discharge function.

FIG. 1A illustrates as a reference a general single-lever mixing faucet free from an automatic water discharge function. In the single-lever mixing faucet, cold water supplied through a cold water supply channel 200 and hot water supplied through a hot water supply channel 202 are mixed by a mixing valve 204. Then, the mixed water is delivered to a water discharge hole 208 through a channel 206 and is discharged from the water discharge hole 208 to the outside. There are cases where only cold or hot water flows out of the mixing valve 204 and is delivered to the water discharge hole 208 through the channel 206 in addition to a mix of cold and hot water. Such cases where a mix of cold and hot water flows will be representatively described below.

FIG. 1B illustrates an example in which an electromagnetic valve (opening/closing valve) 210 is provided in the course of the channel 206 that connects the mixing valve 204 and the water discharge hole 208 to each other. In this example, it is possible to automatically start or stop the discharge of water from the water discharge hole 208 by operating the electromagnetic valve 210 based on a detection of a human body by a sensor. In this example, it is possible to adjust the temperature of discharging water during automatic water discharge by the temperature adjusting operation of a lever handle 205. However, when the lever handle 205 is turned to the closed position, that is, the mixing valve 204 is closed, a problem arises in which water is not discharged even when a human body is detected by the sensor.

FIG. 1C illustrates an example in which the electromagnetic valves 210 and 210 are respectively provided in the course of the cold water supply channel 200 and the hot water supply channel 202. In this example, it is possible to automatically start or stop the discharge of water from the water discharge hole 208 by operating the electromagnetic valves 210 and 210 based on the detection of a human body by the sensor. Even in this example, it is possible to adjust the temperature of water discharging from the water discharge hole 208 during automatic water discharge by the temperature adjusting operation of the lever handle 205. However, when the lever handle 205 is turned to the closed position, that is, the mixing valve 204 is closed, it is not possible to automatically start or stop the discharge of water from the water discharge hole 208.

On the other hand, FIG. 1D illustrates an example in which a bypass channel 212 connects the channel 206 and the cold water supply channel 200 to each other so as to bypass the mixing valve 204 and the bypass channel 212 is provided with the electromagnetic valve 210. In this example, it is possible to manually start or stop the discharge of water from the water discharge hole 208 and to adjust the temperature of the discharging water by the operation of the lever handle 205. That is, the single-lever mixing faucet has a manual water discharge function. Further, in this example, even when the lever handle 205 is turned to the closed position and thus the mixing valve 204 is closed, it is possible to automatically discharge water from the water discharge hole 208 based on the sensor-based detection of a human body. In this example, when water is automatically discharged from the water discharge hole 208 based on the sensor-based detection of a human body, a problem arises in which only water (cold water) may be discharged from the water discharge hole 208 and the temperature of the discharging water may not be adjusted.

As a related art of the present invention, PTL 1 discloses an invention directed to an "automatic faucet". PTL 1 discloses a single-lever mixing faucet configured as an automatic faucet. In the single-lever mixing faucet disclosed in PTL 1, electromagnetic valves are respectively provided in the cold water supply channel and the hot water supply channel for supplying cold water and hot water to a mixing valve, or an electromagnetic valve is provided in a channel between the mixing valve and the water discharge hole. Accordingly, the single-lever mixing faucet disclosed in PTL 1 corresponds to the examples illustrated in FIGS. 1C and 1B, and has the same problem as that described for the examples.

PTL 2 discloses an invention directed to a "mixing faucet". In the mixing faucet disclosed in PTL 2, a fixed plate (9) is provided with a first outlet hole (7) on a shower side and a second outlet hole (8) on a tap side. When a movable plate (11) is rotated in one direction by a motor (25), a mix of cold and hot water is allowed to flow out of the first outlet hole (7) on the shower side. When the movable plate (11) is rotated in the opposite direction, the mixed water is allowed to flow out of the second outlet hole (8) on the tap side. The mixing faucet disclosed in PTL 2 is different from the present invention in that both the first outlet hole (7) and the second outlet hole (8) are closed or only one of them is opened.

PTL 3 discloses an invention directed to a "mixing faucet capable of switching between sensor-based water discharge and manual water discharge". The mixing faucet disclosed in PTL 3 has a temperature adjusting function as well as allows for manual or automatic discharge hot water (mixed water). PTL 3 discloses the following features: a split water control valve (20) is provided with a first water discharge hole (21) for an automatic water discharge and a second water discharge hole (22) for a manual water discharge; the discharge of water from the first water discharge hole (21) for automatic water discharge and the discharge of water from the second water discharge hole (22) for manual water discharge are switched by an operation of a control bar (24); hot water flows through the second water discharge hole (22), a manual water discharge hole (12), a merging hole (15), and a water discharge pipe (16) during manual water discharge; and hot water flows through the first water discharge hole (21), a sensor water discharge hole (11), a sensor water guide pipe (31), a controller (electromagnetic valve) (30), a sensor water guide pipe (32), the merging hole (15), and the water discharge pipe (16) during automatic water discharge.

The mixing faucet disclosed in PTL 3 has an automatic water discharge function and a manual water discharge function, and can switch between automatic water discharge and manual water discharge by the operation of the control bar (24). However, PTL 3 does not disclose how cold water and hot water are mixed by the operation of the control bar (24) inside the split water control valve (mixing valve) (20). PTL 3 also does not disclose, for example, how switching between discharge of mixed water from the first water discharge hole (21) for automatic water discharge and discharge of mixed water from the second water discharge hole (22) for manual water discharge is achieved. Moreover, PTL 3 does not disclose the internal structure of the split water control valve (20). Further, PTL 3 does not disclose a configuration in which the split water control valve (mixing valve) (20) includes the fixed valve body and the movable valve body and the fixed valve body includes the outlet valve hole which is kept opened.

### Citation List

### Patent Literature

PTL 1
   Japanese Patent Application Laid-Open No. 2011-94480
PTL 2
   Japanese Patent Application Laid-Open No. 62-159872
PTL 3
   Japanese Utility Model Registration No. 3173805

### Summary of Invention

### Technical Problem

In view of the above-described circumstances pertinent in the art, it is an object of the present invention to provide a single-lever mixing faucet that can achieve a function of manually discharging water from a water discharge hole by an operation of a lever handle and a function of automatically discharging water from the water discharge hole based on a detection of a human body by a sensor, and that provides good usability for automatic water discharge. It is another object of the present invention to provide a single-lever mixing faucet capable of adjusting a temperature of discharging water during automatic water discharge based on the automatic water discharge function.

### Solution to Problem

The present invention relates to the following single-lever mixing faucet.

[1] A single-lever mixing faucet including: a fixed valve body which includes a cold water inlet valve hole, a hot water inlet valve hole, and a first outlet valve hole; a movable valve body which includes a communication opening for causing the cold water inlet valve hole and/or the hot water inlet valve hole to communicate with the first outlet valve hole, the movable valve body being capable of sliding over the fixed valve body; and a lever handle for moving the movable valve body, wherein discharge of water is started and stopped and a water discharge amount is adjusted by enabling or disabling a communication of the cold water inlet valve hole and/or the hot water inlet valve hole with respect to the first outlet valve hole through the communication opening when the lever handle is turned the open or closed position, a temperature of discharging water is adjusted by changing opening degrees of the cold water inlet valve hole and the hot water inlet valve hole with respect to the communication opening with an inverse relation when the lever handle is turned to adjust the temperature of the discharging water, and the fixed valve body includes a second outlet valve hole which is kept opened by communicating with the cold water inlet valve hole and/or the hot water inlet valve hole through the communication opening.

[2] The single-lever mixing faucet according to [1], wherein a temperature of water flowing out of the second outlet valve hole is adjusted by changing the opening degrees of the cold water inlet valve hole and the hot water inlet valve hole with respect to the communication opening with an inverse relation when the lever handle is turned to adjust the water temperature in a state where the first outlet valve hole is closed so as not to communicate with the cold water inlet valve hole and/or the hot water inlet valve hole.

[3] The single-lever mixing faucet according to [1] or [2], further comprising: a first channel which guides water flowing out of the first outlet valve hole to the water discharge hole; a second channel which guides water flowing out of the second outlet valve hole to the water discharge hole or another water discharge hole; and an opening/closing valve which is electrically driven based on a detection of a human body by a sensor, the opening/closing valve being provided in the course of the second channel.

### Advantageous Effects of Invention

As described above, the present invention relates to a single-lever mixing faucet including the second outlet valve hole which is kept opened by communicating all the time with the cold water inlet valve hole and/or the hot water inlet valve hole through the communication opening regardless of the operation of the lever handle in addition to the outlet valve hole (first outlet valve hole) which is opened or closed by the opening or closing operation by the lever handle so as to communicate with or not to communicate with the cold water inlet valve hole and/or the hot water inlet valve hole through the communication opening of the movable valve body, wherein the first and second outlet valve holes are provided as the outlet valve hole of the fixed valve body.

The single-lever mixing faucet of the present invention allows for manual start or stop of water discharge from the water discharge hole as well as manual adjustment of water flow by opening or closing the first outlet valve hole based on the opening or closing operation by the lever handle. Since the second outlet valve hole is kept opened regardless of the operation of the lever handle, cold water, hot water, or a mix of cold and hot water is allowed to flow out of the second outlet valve hole regardless of the opening or closing operation by the lever handle.

When the second outlet valve hole communicates with only the cold water inlet valve hole, only cold water flows out of the second outlet valve hole. When the second outlet valve hole communicates with only the hot water inlet valve hole, only hot water flows out of the second outlet valve hole. When the second outlet valve hole communicates with both the cold water inlet valve hole and the hot water inlet valve hole, a mix of cold and hot water flows out of the second outlet valve hole.

In the present invention, the single-lever mixing faucet includes the first channel which guides the water flowing out of the first outlet valve hole to the water discharge hole; the second channel which guides the water flowing out of the second outlet valve hole to the same water discharge hole or another water discharge hole; and the opening/closing valve which is provided in the course of the second channel and is electrically driven, wherein the opening/closing valve is operated based on the detection of the human body by the sensor (above-described [3]). Accordingly, water can be manually discharged from the water discharge hole by turning the lever handle to the open position and water can be automatically discharged from the water discharge hole by sensor-based detection of a human body. That is, the single-lever mixing faucet can have an automatic water discharge function in addition to a manual water discharge function. Further, in the present invention, since the second outlet valve hole is kept open even in a state where the lever handle is turned to the closed position, the automatic water discharge function can be exhibited even when the lever handle is turned to the closed position.

Further, in the present invention, since the second outlet valve hole is kept opened regardless of the operation state of the lever handle, the user can allow water to be automatically discharged from the water discharge hole just by the sensor-based detection of his/her body without having to pay particular attention to the current operation state of the lever handle or without having to switch the lever handle for automatic water discharge.

That is, according to the present invention, the user does not need to perform a particular operation for automatic water discharge. Accordingly, the user can allow water to be automatically discharged from the water discharge hole just by stretching out his/her hand or other body part without having to pay particular attention or perform a particular operation. In this way, the single-lever mixing faucet of the present invention provides good usability for automatic water discharge. In particular, it is possible to provide better usability for automatic water discharge in cases where the water discharge hole for automatic water discharge and the water discharge hole for manual water discharge are provided separately from each other. In order to automatically discharge water from the water discharge hole for automatic water discharge, the user does not need to perform a particular operation, e.g., turning the lever handle to the closed position to stop the discharge of water from the manual water discharge hole.

The foregoing better usability is obtained by a configuration in which the second outlet valve hole is kept opened regardless of the operation state of the lever handle as described above. Furthermore, a configuration may be employed in which two or more second outlet valve holes are provided so as to be kept opened and two or more the water discharge holes for automatic water discharge are provided so as to correspond thereto.

In the present invention, the opening degrees of the cold water inlet valve hole and the hot water inlet valve hole with respect to the communication opening can be changed with an inverse relation when the lever handle is turned to adjust the water temperature while maintaining the communication state of the second outlet valve hole with respect to the cold water inlet valve hole and/or the hot water inlet valve hole in the state where the first outlet valve hole is closed so as not to communicate with the cold water inlet valve hole and/or the hot water inlet valve hole (above-described [2]). In this way, in a case where the second outlet valve hole is configured as a valve hole for automatic water discharge, it is possible to adjust the temperature of the discharging water during automatic water discharge by the operation of the lever handle thus improving the quality of the automatic water discharge function.

### Brief Description of Drawings

FIGS. 1A to 1D schematically illustrate an example of a method of applying an automatic water discharge function of the related art to a single lever faucet;
FIG. 2 illustrates a single-lever mixing faucet according to an embodiment of the present invention;
FIG. 3 illustrates an internal structure of a faucet body of FIG. 2;
FIG. 4 illustrates a valve cartridge of FIG. 3;
FIG. 5 is an exploded diagram illustrating constituent parts of the valve cartridge of FIG. 4;
FIGS. 6A and 6B illustrate a fixed valve body of the valve cartridge of FIG. 4;
FIGS. 7A and 7B illustrate the fixed valve body and a bottom cover of FIG. 4;
FIG. 8 illustrates an operation of the valve cartridge of the embodiment; and
FIG. 9 illustrates an operation of a valve cartridge of the related art as a comparative example.

### Description of Embodiments

Next, an exemplary embodiment of the present invention will be described in detail with reference to the accompanying drawings.

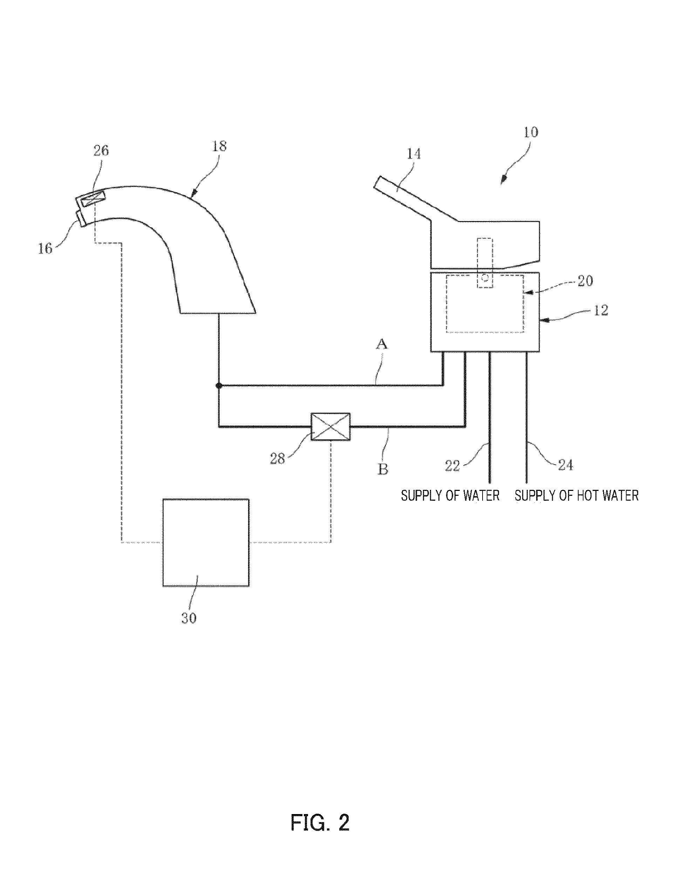

FIG. 2 illustrates a single-lever mixing faucet according to an embodiment of the present invention. As shown in FIG. 2, a single-lever mixing faucet 10 (hereinafter, simply referred to as a faucet) includes a faucet body 12, a lever handle 14 which is disposed at the top of the faucet body 12, and a water discharge part 18 which has a water discharge hole 16 formed at the front end thereof. The faucet body 12 includes therein a valve cartridge 20 as a mixing valve. Cold water and hot water are supplied to the valve cartridge 20 respectively through a cold water supply channel 22 and a hot water supply channel 24.

A first channel A for manual water discharge and a second channel B for automatic water discharge extend from the valve cartridge 20. The water which flows out of the valve cartridge 20 is delivered to the water discharge hole 16 through the first channel A or the second channel B and is discharged from the water discharge hole 16 to the outside.

The front end of the water discharge part 18 is provided with a sensor 26 for detecting a human body. An electromagnetic valve (opening/closing valve) 28 is provided in the course of the channel B for automatic water discharge. The sensor 26 and the electromagnetic valve 28 are electrically connected to a control unit 30.

In the embodiment, when the sensor 26 detects a human body, the electromagnetic valve 28 is opened under the control of the control unit 30. Accordingly, the second channel B is cleared of any blockage thus allowing water to flow therethrough. The water which flows out of the valve cartridge 20 is delivered to the water discharge hole 16 through the channel B and is automatically discharged from the water discharge hole 16. When the sensor 26 does not detect a human body, the electromagnetic valve 28 is closed. Accordingly, the supply of water to the water discharge hole 16 through the second channel B is stopped. That is, the discharge of water from the water discharge hole 16 is stopped. The sensor 26 may be an alternate sensor which starts the discharge of water when a human body is detected, continues the discharge of water even when no human body is detected later, and stops the discharge of water when a human body is detected again.

The first channel A allows the valve cartridge 20 to communicate all the time with the water discharge hole 16. Accordingly, when the lever handle 14 is turned to the open position so as to cause water to flow out of the valve cartridge 20 toward the first channel A, the flowing water is delivered to the water discharge hole 16 through the first channel A and is discharged from the water discharge hole 16 to the outside. When the lever handle 14 is turned to the closed position so as to stop the flow of water from the valve cartridge 20 toward the first channel A, the discharge of water from the water discharge hole 16 is stopped.

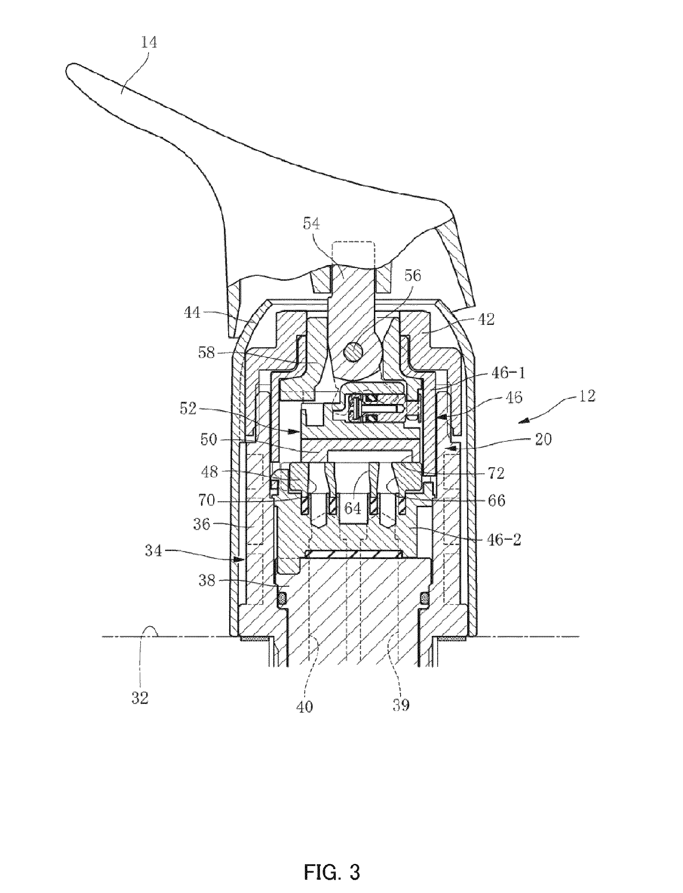

FIG. 3 specifically illustrates the internal structure of the faucet body 12. As shown in FIG. 3, the faucet body 12 is attached to an attachment surface 32. A housing 34 includes a cylindrical circumferential wall 36 and a bottom part 38 which is separated from the circumferential wall 36, and forms the main body of the faucet body 12. The housing 34 includes therein the valve cartridge 20.

The bottom part 38 is provided with a pair of inlet channels 39 (in the drawings, only one channel 39 is shown) which forms part of the cold water supply channel 22 and the hot water supply channel 24. Further, the bottom part 38 is provided with a pair of outlet channels 40 (in the drawings, only one channel 40 is shown) which forms part of the first channel A and the second channel B shown in FIG. 2. Furthermore, in the embodiment, a fixing nut 42 is screwed into the housing 34 such that the valve cartridge 20 is press-inserted and fixed. The housing 34 is covered by a decoration cover 44 along with the fixing nut 42 from the outside.

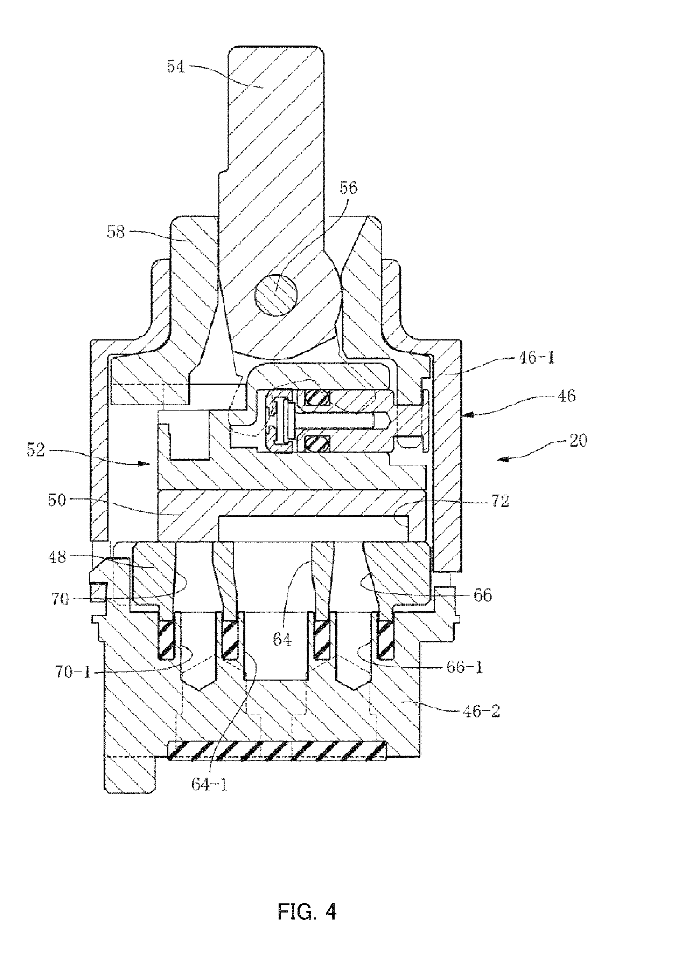

As shown in FIGS. 3 and 4, a cartridge casing 46 of the valve cartridge 20 is formed as a two-separated structure with an upper casing body 46-1 and a lower bottom cover 46-2. The upper casing body 46-1 and the lower bottom cover 46-2 are combined with each other vertically so as to form the cartridge casing 46.

The cartridge casing 46 includes therein a fixed valve body 48 and a movable valve body 50 configured to slide over the upper surface thereof. Each of the fixed valve body 48 and the movable valve body 50 is configured as a disc. The movable valve body 50 is operatively connected to a lever shaft 54 through a driving unit 52. Further, the lever shaft 54 is fixed to the lever handle 14 so as to be movable along with the lever handle 14.

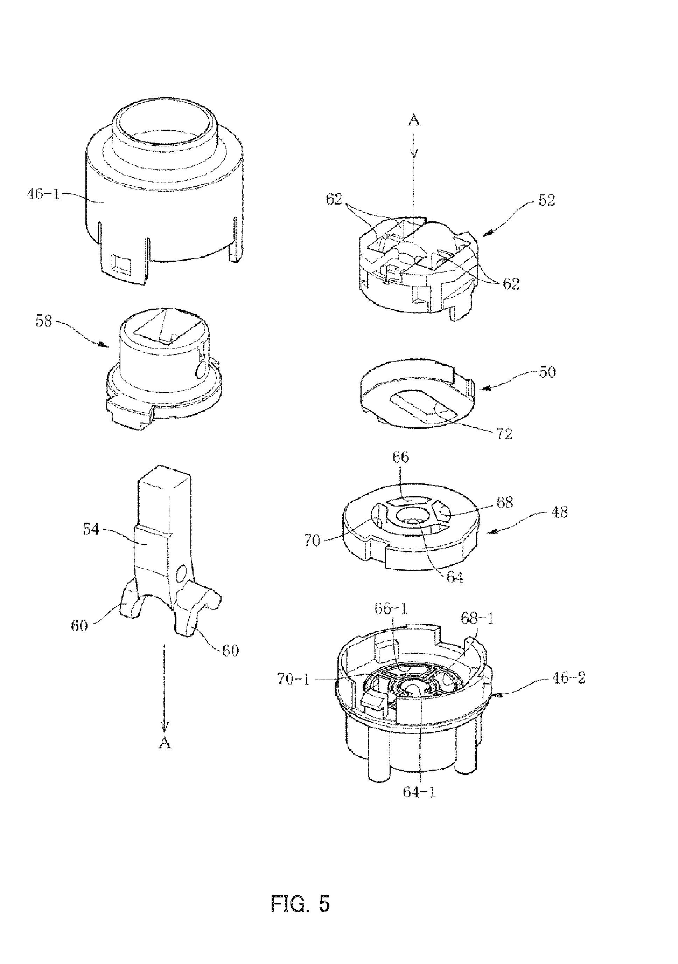

The lower end of the lever shaft 54 is connected to a rotation body 58 through a support pin 56 so as to rotate together therewith. Further, the lever shaft 54 is provided with a pair of fork parts 60 which protrudes downward as shown in FIG. 5. The fork part 60 engages into a recess 62 of the driving unit 52.

When the lever shaft 54 rotates about the support pin 56 along with the lever handle 14 and rotates about the axis of the rotation body 58 along with the rotation body 58, an operation to the lever handle 14 is transmitted to the movable valve body 50 through the driving unit 52 so that the movable valve body 50 slides in the corresponding direction.

Specifically, when the lever handle 14 is moved in the vertical direction (up or down direction) in FIG. 3, the movable valve body 50 slides linearly in the lateral direction in FIGS. 3 and 4. Further, when the lever handle 14 is turned in the lateral direction which is perpendicular to the drawing paper of FIG. 3, the movable valve body 50 rotates and slides in a direction perpendicular to the drawing paper surface of FIGS. 3 and 4.

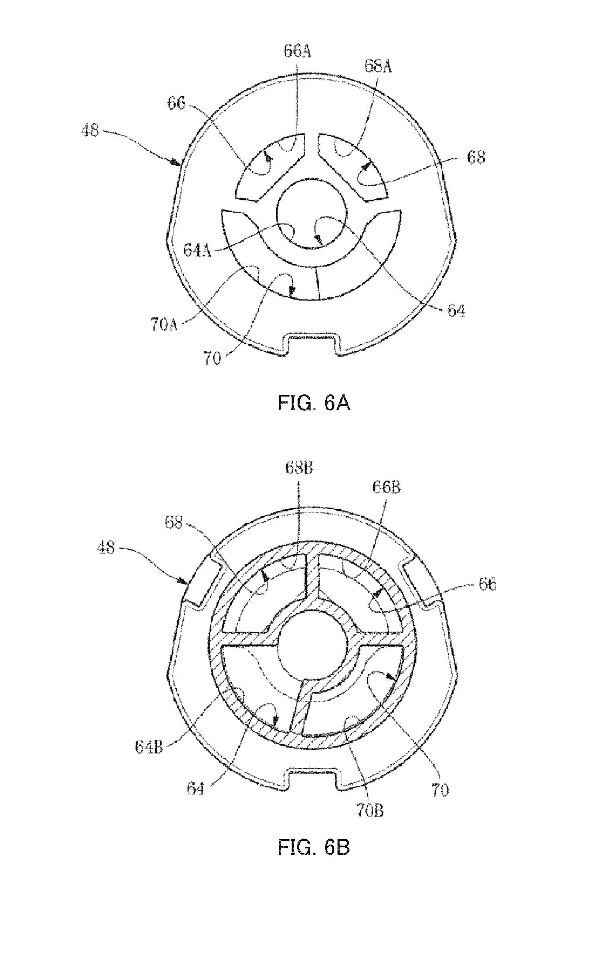

FIGS. 6A and 6B specifically illustrate the shape of the fixed valve body 48. As shown in FIG. 6A, an outlet valve hole (second outlet valve hole) 64 for automatic water discharge to be described later is provided at the center portion of the fixed valve body 48. Then, a cold water inlet valve hole 66, a hot water inlet valve hole 68, and an outlet valve hole (first outlet valve hole) 70 for manual water discharge are arranged around the second outlet valve hole 64. Each of the second outlet valve hole 64, the cold water inlet valve hole 66, the hot water inlet valve hole 68, and the first outlet valve hole 70 are formed so as to penetrate full thickness of the fixed valve body 48. However, in the respective valve holes, there is a difference between the front side opening shape near the movable valve body 50 and the rear side opening shape near the bottom cover 46-2. FIG. 6A illustrates a shape of the fixed valve body 48 on the side of the movable valve body 50 (front side). As shown in the drawing, a front side opening 64A of the second outlet valve hole 64 is formed in a circular shape. A front side opening 66A of the cold water inlet valve hole 66 and a front side opening 68A of the hot water inlet valve hole 68 are respectively formed in a substantially circular-arc shape. Further, a front side opening 70A of the first outlet valve hole 70 for manual water discharge is formed in a substantially semi-circular shape.

FIG. 6B illustrates the shape of the fixed valve body 48 at the side (rear side) of the bottom cover 46-2. As shown in the drawing, a rear side opening 64B of the second outlet valve hole 64 is formed in a shape obtained by the combination of the circular center portion and a substantially fan-like outer peripheral portion. Further, each of a rear side opening 66B of the cold water inlet valve hole 66 and a rear side opening 68B of the hot water inlet valve hole 68 is formed in a circular-arc shape. Further, a rear side opening 70B of the first outlet valve hole 70 is also formed in a substantially circular-arc shape.

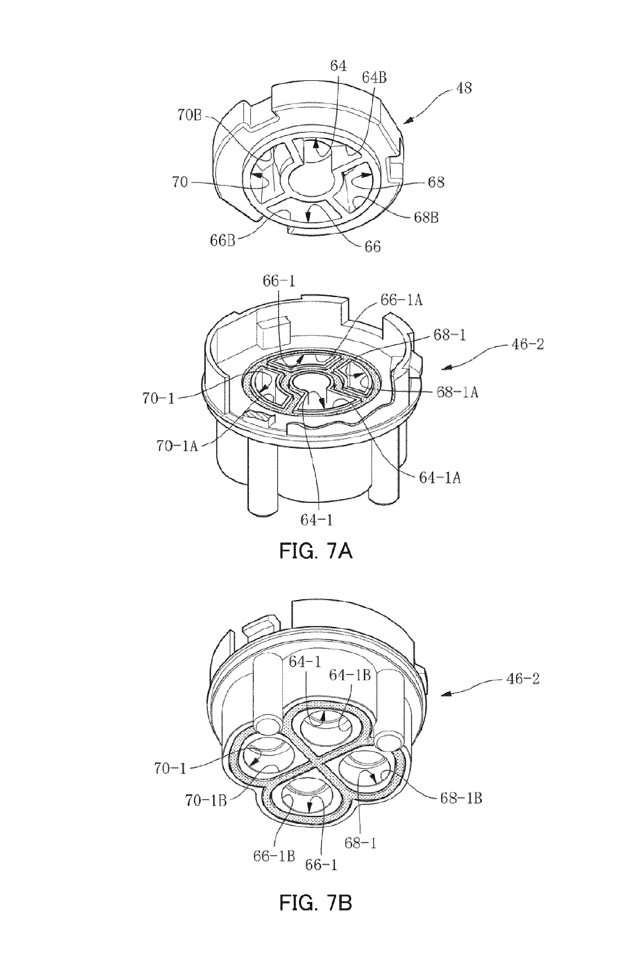

As shown in FIGS. 7A and 7B, the bottom cover 46-2 of the cartridge casing 46 is also provided with a channel 64-1 corresponding to the second outlet valve hole 64 of the fixed valve body 48, a channel 66-1 corresponding to the cold water inlet valve hole 66, a channel 68-1 corresponding to the hot water inlet valve hole 68, and a channel 70-1 corresponding to the first outlet valve hole 70 which are respectively provided so as to penetrate the bottom cover 46-2. Even in the respective channels of the bottom cover 46-2, there is a difference between the shape on the side of the fixed valve body 48 (front side) and the shape on the rear side thereof.

FIG. 7A illustrates the shape of the channels of the bottom cover 46-2 on the side of the fixed valve body 48 (front side). As shown in FIG. 7A, front side openings 64-1A, 66-1A, 68-1A, and 70-1A of the channels 64-1, 66-1, 68-1, and 70-1 of the bottom cover 46-2 respectively formed in shapes corresponding to the rear side openings 64B, 66B, 68B, and 70B of the second outlet valve hole 64, the cold water inlet valve hole 66, the hot water inlet valve hole 68, and the first outlet valve hole 70 of the fixed valve body 48.

As shown in FIG. 7B, each of rear side openings 64-1B, 66-1B, 68-1B, and 70-1B of the channels 64-1, 66-1, 68-1, and 70-1 is formed in a circular shape. The rear side openings 64-1B, 66-1B, 68-1B, and 70-1B are arranged at positions separated from each other by 90° in the circumferential direction.

On the other hand, as shown in FIGS. 4 and 5, the movable valve body 50 which slides over the fixed valve body 48 is provided with a communication opening 72 which is opened to the side of the fixed valve body 48 (rear side) and causes one or both of the cold water inlet valve hole 66 and the hot water inlet valve hole 68 to communicate with the pair of outlet valve holes 64 and 70. The communication opening 72 is a non-penetrated opening which does not penetrate full thickness of the movable valve body 50.

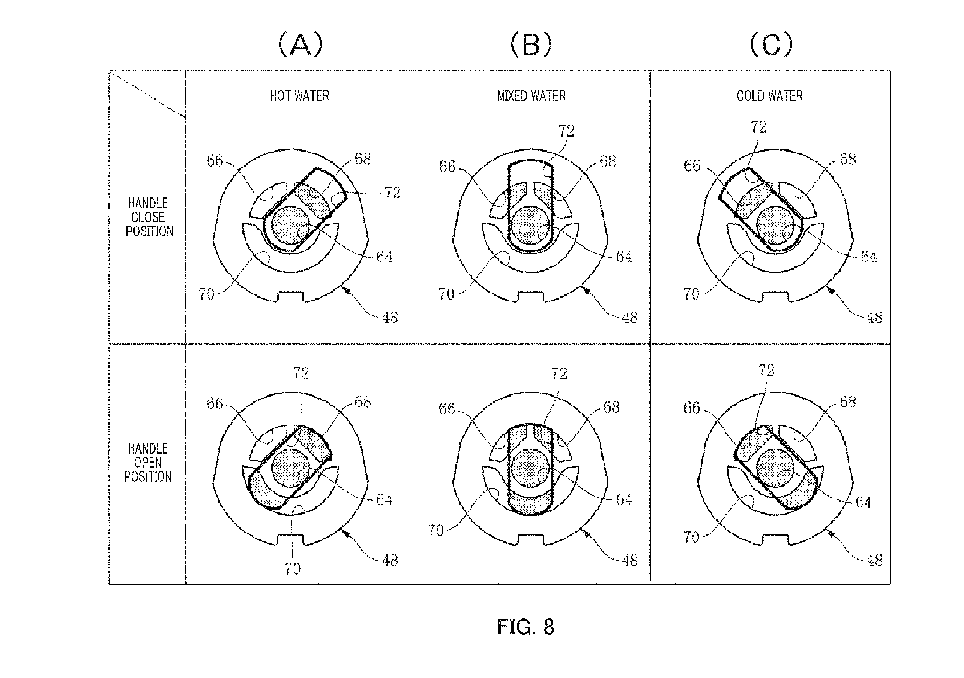

FIG. 8 illustrates an operation of the valve cartridge 20 in the faucet 10 of the embodiment of the present invention. In FIG. 8, the upper portion indicates a state where the lever handle 14 is turned to the closed position. The lower portion indicates a state where the lever handle 14 is turned to the open position. Further, the column (B) of FIG. 8 illustrates a state where the lever handle 14 is just positioned at the center of lateral motion range. The column (A) of FIG. 8 illustrates a state where the lever handle 14 is operated to the hot water side. The column (C) of FIG. 8 illustrates a state where the lever handle 14 is turned to the cold water side.

As illustrated in the lower portion of (B) of FIG. 8, when the lever handle 14 is turned to the full open position (moved upward) at the center position (neutral position) of its lateral motion range, the first outlet valve hole 70 on the manual water discharge side is opened, so that the communication opening 72 of the movable valve body 50 communicates with both the cold water inlet valve hole 66 and the hot water inlet valve hole 68. Accordingly, the water which flows from the cold water inlet valve hole 66 and the hot water which flows from the hot water inlet valve hole 68 are mixed inside the communication opening 72. The mixed water flows out of the first outlet valve hole 70.

The flowing mixed water reaches the water discharge hole 16 of the front end of the water discharge part 18 while flowing through the first channel A for manual water discharge of FIG. 2, and is discharged from the water discharge hole 16 to the outside. At this time, in the state illustrated at the lower portion of (B) of FIG. 8, the cold water inlet valve hole 66 and the hot water inlet valve hole 68 are opened by the same opening degree with respect to the communication opening 72. Accordingly, cold water and hot water are mixed in equal volumes and flow out of the outlet valve hole 70.

When the lever handle 14 is turned in the lateral direction in this state, the opening degrees of the cold water inlet valve hole 66 and the hot water inlet valve hole 68 with respect to the communication opening 72 change with an inverse relation in response to the turning amount (angle of turning). Accordingly, the amounts of the cold water and the hot water respectively flowing through the cold water inlet valve hole 66 and the hot water inlet valve hole 68 change, so that the temperature of water (mixed water) flowing out of the outlet valve hole 70 changes. That is, the temperature of water discharged from the water discharge hole 16 is adjusted.

When the lever handle 14 is turned to the left as far as possible, only the hot water inlet valve hole 68 communicates with the communication opening 72 as illustrated at the lower portion of (A) of FIG. 8. In this state, only the hot water is discharged from the water discharge hole 16. On the other hand, when the lever handle 14 is turned to the right as far as possible, only the cold water inlet valve hole 66 communicates with the communication opening 72 as illustrated at the lower portion of (C) of FIG. 8. In this state, only the water from the cold water inlet valve hole 66 is discharged from the water discharge hole 16.

Further, when the lever handle 14 is turned in the close direction (downward direction) in the state as illustrated in the lower portions of the columns (A) to (C) of FIG. 8, the opening degree of the first outlet valve hole 70 with respect to the communication opening 72 decreases in response to the amount of operation to the lever handle 14. Accordingly, the amount of water discharged from the water discharge hole 16 decreases.

When the lever handle 14 is then moved in the close direction (downward direction) as far as possible, the first outlet valve hole 70 is closed as illustrated at the upper portions of the columns (A) to (C) of FIG. 8, so that the first outlet valve hole 70 does not communicate with the cold water inlet valve hole 66 and the hot water inlet valve hole 68. That is, the discharge of water from the water discharge hole 16 through the first channel A illustrated in FIG. 2 is stopped.

In the embodiment, the second outlet valve hole 64 for automatic water discharge is kept opened regardless of the operation state of the lever handle 14. The second outlet valve hole 64 communicates with any one or both of the cold water inlet valve hole 66 and the hot water inlet valve hole 68 through the communication opening 72. In this way, the shapes and the positions of the second outlet valve hole 64, the cold water inlet valve hole 66, and the hot water inlet valve hole 68 are determined in advance.

Accordingly, in the embodiment, even when the first outlet valve hole 70 for manual water discharge is closed by turning the lever handle 14 to the full closed position so as to move the communication opening 72 of the movable valve body 50 to the position illustrated at the upper portions of (A) to (C) of FIG. 8, the second outlet valve hole 64 is maintained in the communication state with respect to the cold water inlet valve hole 66 and/or the hot water inlet valve hole 68, and hence cold water, hot water, or a mix of cold and hot water can flow from the cold water inlet valve hole 66 and/or the hot water inlet valve hole 68 toward the second channel B illustrated in FIG. 2.

Accordingly, when a user stretches out his/her hand in front of the sensor 26 under this state so that the sensor 26 detects the his/her body, the electromagnetic valve 28 is opened, and hence cold water, hot water, or a mix of cold and hot water is automatically discharged from the water discharge hole 16. Further, when the user retracts his/her hand from the sensor 26 so that the sensor 26 does not detect any human body, the electromagnetic valve 28 is closed so that the channel B is closed. Thus, the discharge of water from the water discharge hole 16 is stopped.

The state of the upper portions of FIGS. 8A to 8C indicates a state where the first outlet valve hole 70 is closed so that the first outlet valve hole 70 does not communicate with the cold water inlet valve hole 66 and the hot water inlet valve hole 68. Even in this state, in the embodiment, when the lever handle 14 is turned in the lateral direction, that is, when the temperature is adjusted, the rotational direction of the communication opening 72 changes, and the opening degrees of the cold water inlet valve hole 66 and the hot water inlet valve hole 68 with respect to the communication opening 72 change with an inverse relation. Accordingly, the amounts of cold water and hot water flowing into the communication opening 72 changes, so that the temperature of mixed water changes. Accordingly, according to the embodiment, the temperature of discharging water can be freely adjusted even when water is automatically discharged from the water discharge hole 16.

As described above, an example has been described in which water is discharged from the same water discharge hole 16 regardless of whether manual water discharge or automatic water discharge is employed, but a water discharge hole for automatic water discharge may be provided separately from the water discharge hole 16 for manual water discharge. In this case, a configuration may be employed in which the second channel B is connected to the water discharge hole for automatic water discharge and the sensor 26 is disposed near the water discharge hole for automatic water discharge. In this case, the water can be automatically discharged from the water discharge hole for automatic water discharge regardless of the discharge of water from the water discharge hole 16 for manual water discharge.

In the embodiment, even when the lever handle 14 is turned to the closed or open position that is, the outlet valve hole 70 is opened or closed, the second outlet valve hole 64 always communicates with any one or of both the cold water inlet valve hole 66 and the hot water inlet valve hole 68. Accordingly, the user can allow water to be automatically discharged from the water discharge hole for automatic water discharge as illustrated in the upper and lower portions of columns (A) and (B) of FIG. 8 when the user just stretches out his/her hand in front of the sensor 26 regardless of the operation state of the lever handle 14.

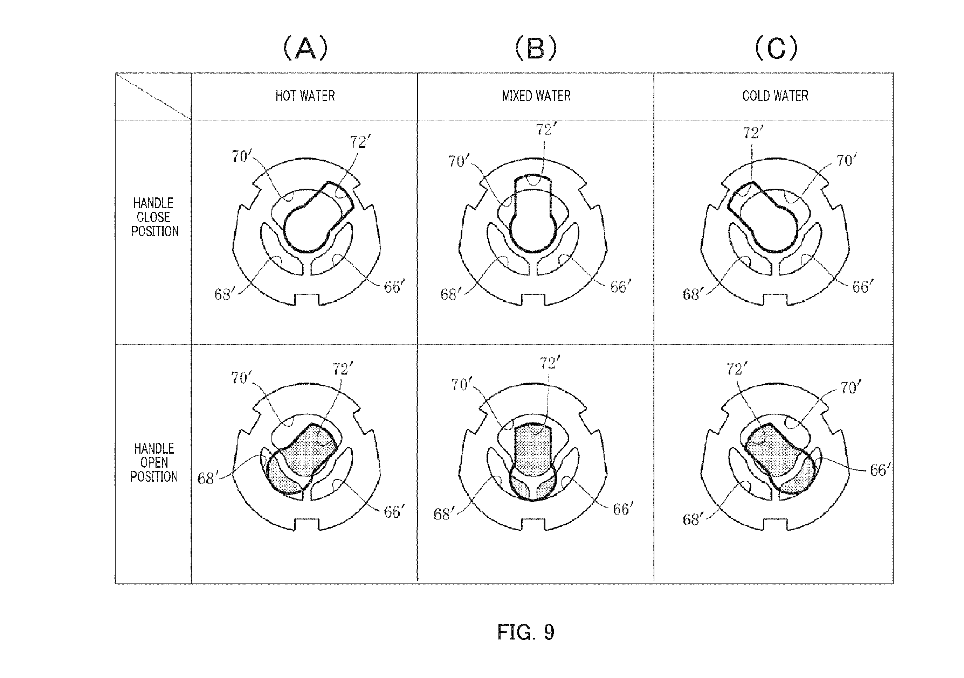

FIG. 9 illustrates an operation of a valve cartridge of a general single-lever mixing faucet of the related art as a comparative example. As illustrated in FIG. 9, in the general single-lever mixing faucet of the related art, when the lever handle is turned to the closed position, a cold water inlet valve hole 66' and a hot water inlet valve hole 68' are closed as illustrated in the upper portions of FIG. 9. For this reason, an outlet valve hole 70' for manual water discharge does not communicate with the cold water inlet valve hole 66' and the hot water inlet valve hole 68'.

On the other hand, in the embodiment, as illustrated in FIG. 8, when the lever handle 14 is turned to the closed position, any one or both of the cold water inlet valve hole 66 and the hot water inlet valve hole 68 are opened, that is, any one or both of the cold water inlet valve hole 66 and the hot water inlet valve hole 68 communicate with the communication opening 72. To achieve such a configuration, in the embodiment, the cold water inlet valve hole 66 and the hot water inlet valve hole 68 are arranged at the opposite positions to the arrangement positions of the cold water inlet valve hole 66' and the hot water inlet valve hole 68' in the single lever faucet of the related art illustrated in FIG. 9 in the direction of opening and closing the lever handle 14.

As described above, in the embodiment, it is possible to manually start or stop the discharge of water from the water discharge hole 16 and to adjust the water discharge amount by opening and closing the first outlet valve hole 70 through an operation of opening and closing the lever handle 14. Further, it is possible to automatically discharge water from the water discharge hole 16 by detecting a human body through the sensor 26 regardless of the operation state of the lever handle 14. That is, the single-lever mixing faucet 10 can have an automatic water discharge function in addition to a manual water discharge function.

Further, in the embodiment, the second outlet valve hole 64 is kept opened regardless of the operation state of the lever handle 14. For this reason, the user can allow water to be automatically discharged from the water discharge hole 16 just by the detection of the human body through the sensor 26 without regard to the current operation state of the lever handle 14 or switching the lever handle 14 for automatic water discharge. That is, the single-lever mixing faucet offers good usability for automatic water discharge.

Further, in the embodiment, it is possible to adjust the temperature of discharging water during the automatic water discharge by the operation of the lever handle 14 thus improving the quality of the automatic water discharge function.

While the embodiment of the invention has been described in detail, this is merely an example. For example, in the above-described embodiment, it is possible to adjust the temperature of discharging water during automatic water discharge by turning the lever handle 14 in lateral direction while the first outlet valve hole 70 for manual water discharge is closed. However, the valve cartridge can also be configured such that the temperature of discharging water during automatic water discharge, that is, the temperature of water flowing out of the first outlet valve hole 70, is set at a constant level. That is, the valve cartridge can be configured such that water temperature adjustment is not performed. In this way, various modifications can be made to the present invention without departing from the spirit of the present invention.

### Industrial Applicability

The single-lever mixing faucet according to the present invention can be applied to, for example, system kitchens.

### Reference Signs List

10 Single-lever mixing faucet
14 Lever handle
16 Water discharge hole
26 Sensor
28 Electromagnetic valve
48 Fixed valve body
50 Movable valve body
64 Outlet valve hole (second outlet valve hole)
66 Cold water inlet valve hole
68 Hot water inlet valve hole
70 Outlet valve hole (first outlet valve hole)
72 Communication opening
A First channel
B Second channel

## Claims

1. A single-lever mixing faucet comprising:
a fixed valve body which includes a cold water inlet valve hole, a hot water inlet valve hole, and a first outlet valve hole;
a movable valve body which includes a communication opening for causing the cold water inlet valve hole and/or the hot water inlet valve hole to communicate with the first outlet valve hole, the movable valve body being capable of sliding over the fixed valve body; and
a lever handle for moving the movable valve body,
wherein discharge of water is started and stopped and a water discharge amount is adjusted by enabling or disabling a communication of the cold water inlet valve hole and/or the hot water inlet valve hole with respect to the first outlet valve hole through the communication opening when the lever handle is turned the open or closed position,
a temperature of discharging water is adjusted by changing opening degrees of the cold water inlet valve hole and the hot water inlet valve hole with respect to the communication opening with an inverse relation when the lever handle is turned to adjust the temperature of the discharging water, and
the fixed valve body includes a second outlet valve hole which is kept opened by communicating with the cold water inlet valve hole and/or the hot water inlet valve hole through the communication opening.

2. The single-lever mixing faucet according to claim 1,
wherein a temperature of water flowing out of the second outlet valve hole is adjusted by changing the opening degrees of the cold water inlet valve hole and the hot water inlet valve hole with respect to the communication opening with an inverse relation when the lever handle is turned to adjust the water temperature in a state where the first outlet valve hole is closed so as not to communicate with the cold water inlet valve hole and/or the hot water inlet valve hole.

3. The single-lever mixing faucet according to claim 1 or 2, further comprising:
a first channel which guides water flowing out of the first outlet valve hole to the water discharge hole;
a second channel which guides water flowing out of the second outlet valve hole to the water discharge hole or another water discharge hole; and
an opening/closing valve which is electrically driven based on a detection of a human body by a sensor, the opening/closing valve being provided in the course of the second channel.
